# FASCICULE DE BREVET EUROPEEN

(11) **EP 1 020 974 B1**
(45) Date de publication et mention de la délivrance du brevet: **02.12.2009**
(21) Numéro de dépôt: 00400041.0
(22) Date de dépôt: 10.01.2000
(51) Int. Cl.: H02J 13/00, H01F 19/00, H01F 27/38, H01F 30/04

(54) **Dispositif de couplage d'une station à un réseau d'alimentation en énergie électrique notamment pour véhicule automobile**
Vorrichtung zur Anbindung einer Station an ein Versorgungsnetzwerk für elektrische Energie insbesondere für Kraftfahrzeuge
Device for connecting a station to an electrical power network especially for automobiles

(30) Priorité: 12.01.1999 FR 9900236
(43) Date de publication de la demande: 19.07.2000
(73) Titulaire: Peugeot Citroën Automobiles SA, 92200 Neuilly sur Seine (FR)
(72) Inventeur: Haese, Sylvain, 35690 Acigne (FR); Malville, Joël, 78360 Montesson (FR)
(74) Mandataire: Ménès, Catherine

(56) Documents cités:
- DE-A- 19 512 855
- US-A- 4 767 980

## Description

La présente invention concerne un dispositif de couplage d'une station à un réseau d'alimentation en énergie électrique de celle-ci, sur lequel transitent des informations en mettant en oeuvre la technique des courants porteurs, notamment pour véhicule automobile.

La technique des courants porteurs consiste à utiliser le réseau d'alimentation en énergie électrique comme support pour les échanges d'informations entre différentes stations raccordées à ce réseau.

Cette technique présente un certain nombre d'avantages parmi lesquels la simplification du câblage d'un réseau de raccordement puisque celle-ci utilise les connexions nécessaires à l'alimentation en puissance des différentes stations.

Dans ce cas, les stations raccordées au réseau comprennent au moins une charge et un modulateur/démodulateur qui permet de superposer et d'extraire de l'alimentation de puissance, un signal porteur des informations.

Différents dispositifs de ce type ont déjà été développés dans l'état de la technique pour des applications en domotique.

Le document DE-A-19512855 décrit un dispositif de couplage selon le préambule de la revendication 1.

Cependant les différents modes de réalisation qui ont été proposés ne sont pas directement transposables à une application dans un véhicule automobile en raison des contraintes particulières liées à ce type d'applications.

Le but de l'invention est donc de résoudre ces problèmes.

A cet effet l'invention a pour objet un dispositif de couplage d'une station à un réseau d'alimentation en énergie électrique de celle-ci, sur lequel transitent des informations en mettant en oeuvre la technique des courants porteurs, notamment pour véhicule automobile, la station comportant au moins une charge et un modulateur/démodulateur, caractérisé en ce qu'il comporte un transformateur à trois enroulements couplés par un noyau magnétique, dont les deux premiers sont associés à la charge et sont raccordés l'un, entre le réseau et une première borne d'alimentation de la charge et l'autre, entre une deuxième borne d'alimentation de la charge et la masse, de manière à être traversés par des courants circulant en sens inverse, et dont le troisième est relié au modulateur/démodulateur et un premier condensateur de découplage dont une première borne est raccordée entre la première borne d'alimentation de la charge et l'enroulement correspondant du transformateur et dont une seconde borne est raccordée à la masse.

Avantageusement, un second condensateur de découplage est raccordé en parallèle aux bornes du troisième enroulement.

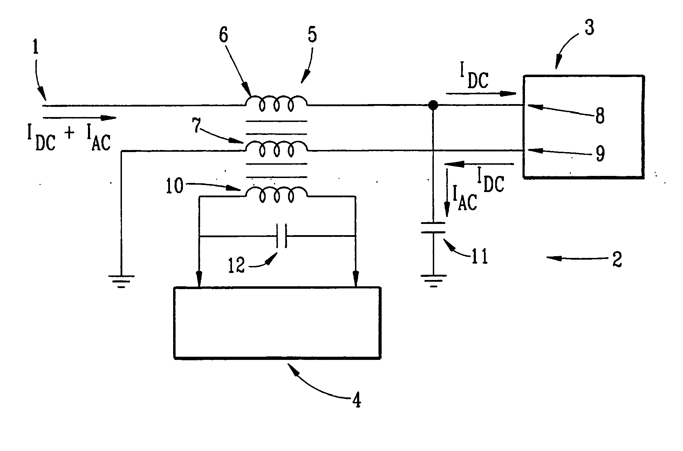

L'invention sera mieux comprise à l'aide de la description qui va suivre donnée uniquement à titre d'exemple et faite en se référant au dessin annexé qui représente un schéma synoptique d'un exemple de réalisation d'un dispositif de couplage selon l'invention.

Comme cela a été indiqué précédemment, l'invention se rapporte à un dispositif de couplage d'une station à un réseau d'alimentation en énergie électrique de celle-ci, sur lequel transitent des informations en mettant en oeuvre la technique des courants porteurs.

Ce dispositif peut être utilisé pour raccorder des stations d'un réseau d'un véhicule automobile.

Sur la figure, le réseau d'alimentation est désigné par la référence générale 1, tandis que la station est désignée par la référence générale 2 et cette station comporte au moins une charge désignée par la référence générale 3 et un modulateur/démodulateur désigné par la référence générale 4, raccordés à ce réseau.

Selon l'invention, ce dispositif comporte un transformateur à trois enroulements, désigné par la référence générale 5 sur cette figure, ces trois enroulements étant couplés par un noyau magnétique.

Les deux premiers de ces enroulements, c'est-à-dire par exemple les enroulements désignés par les références 6 et 7 sur cette figure, sont associés à la charge 3 et sont raccordés l'un, c'est-à-dire par exemple l'enroulement 6, entre le réseau 1 et une première borne d'alimentation de la charge 3, désignée par la référence générale 8 et l'autre, c'est-à-dire par exemple l'enroulement 7, entre une seconde borne d'alimentation de la charge 3, désignée par la référence générale 9, et la masse, de manière à être traversés par des courants circulant en sens inverse.

Le troisième enroulement désigné par la référence générale 10, est relié au modulateur/démodulateur 4.

Un premier condensateur de découplage, désigné par la référence générale 11, est également prévu. Une première borne de ce condensateur 11 est raccordée entre la première borne d'alimentation 8 de la charge 3 et l'enroulement correspondant par exemple 6, du transformateur, et une seconde borne de ce condensateur 11 est raccordée à la masse.

Avantageusement également, un second condensateur de découplage désigné par la référence générale 12, peut être raccordé en parallèle aux bornes du troisième enroulement par exemple 10, du transformateur.

Ce dispositif repose donc sur l'utilisation d'un transformateur 5 à trois enroulements couplés par un noyau magnétique.

La charge 3 est alors alimentée à travers les enroulements 6 et 7.

Le courant circulant dans le réseau présente deux composantes à savoir une composante continue ou dans certains cas à basse fréquence I_{DC} et une composante à haute fréquence I_{AC} qui est le support des informations.

Dans le dispositif selon l'invention, cette composante à haute fréquence I_{AC} est dérivée vers la masse après son passage dans l'enroulement 6 du transformateur, à travers le condensateur 11, qui doit présenter une impédance faible à la fréquence des signaux porteurs des informations.

On conçoit alors que la charge 3 ne reçoit pratiquement que la composante continue ou à basse fréquence du courant d'alimentation.

Comme on l'a indiqué précédemment, les courants circulant dans les enroulements 6 et 7 circulent en sens inverse.

Une réalisation appropriée de ces enroulements rend possible l'annulation de la composante à basse fréquence ou continue développée par l'enroulement 6 en produisant une induction de même valeur mais de signe opposé par l'enroulement 7.

L'annulation de cette induction est destinée à éviter les problèmes de saturation du noyau magnétique et donc à diminuer le coût et l'encombrement du transformateur 5.

Ceci permet alors de réaliser un transformateur économique même dans le cas de courants de forte valeur rencontrés par exemple dans les applications à des véhicules automobiles.

Le condensateur 11 provoque alors un courant différentiel entre les enroulements 6 et 7, couplé à l'enroulement 10. On notera que le rapport de transformation entre ces enroulements peut être optimisé par le choix du nombre des spires de ceux-ci.

De plus, le second condensateur 12 peut être ajouté aux bornes du troisième enroulement 10 pour rendre la couplage sélectif en fréquence.

On conçoit alors que ce dispositif de couplage est particulièrement adapté aux applications dans lesquelles un courant de forte valeur traverse la charge. Il permet en outre de coupler sélectivement le signal porteur des informations à transmettre et d'optimiser l'adaptation d'impédance tout en réduisant les variations de niveau de signal par rapport aux variations de charge.

Enfin, il permet une connexion particulièrement adaptée aux circuits électroniques constituant le modulateur/démodulateur en prévoyant un accès couplé flottant par rapport à la masse.

Il va de soi bien entendu que d'autres modes de réalisation d'un tel dispositif peuvent être envisagés.

## Revendications

1. Dispositif de couplage d'une station (2) à un réseau d'alimentation en énergie électrique (1) de celle-ci, sur lequel transitent des informations en mettant en oeuvre la technique des courants porteurs, notamment pour véhicule automobile, la station (2) comportant au moins une charge (3) et un modulateur/démodulateur (4), **caractérisé en ce qu'**il comporte un transformateur (5) à trois enroulements (6, 7, 10) couplés par un circuit magnétique, dont les deux premiers (6, 7) sont associés à la charge (3) et sont raccordés l'un (6), entre le réseau (1) et une première borne d'alimentation (8) de la charge et l'autre (7), entre une deuxième borne d'alimentation (9) de la charge et la masse, de manière à être traversés par des courants circulant en sens inverse, et dont le troisième (10) est relié au modulateur/démodulateur (4), le dispositif comportant aussi un premier condensateur de découplage (11), dont une première borne est raccordée entre la première borne d'alimentation (8) de la charge et l'enroulement correspondant (6) du transformateur et dont une seconde borne est raccordée à la masse.

2. Dispositif selon la revendication 1, **caractérisé en ce qu'**un second condensateur (12) de découplage est raccordé en parallèle aux bornes du troisième enroulement (10).

## Claims

1. Device for coupling a station (2) to a network for supplying the latter with electric power (1), over which information travels by using the technique of carrier currents, particularly for a motor vehicle, the station (2) comprising at least one load (3) and one modulator/demodulator (4), **characterized in that** it comprises a transformer (5) with three windings (6, 7, 10) coupled by a magnetic circuit, the first two (6, 7) of which are associated with the load (3) and one winding (6) of which is connected between the network (1) and a first supply terminal (8) of the load and the other (7) of which is connected between a second supply terminal (9) of the load and the earth, so as to be traversed by currents travelling in opposite directions, and of which the third (10) winding is connected to the modulator/demodulator (4), the device also comprising a first decoupling capacitor (11), a first terminal of which is connected between the first supply terminal (8) of the load and the corresponding winding (6) of the transformer and a second terminal of which is connected to the earth.

2. Device according to Claim 1, **characterized in that** a second decoupling capacitor (12) is connected in parallel to the terminals of the third winding (10).

## Patentansprüche

1. Vorrichtung zur Kopplung einer Station (2) an ein Netz (1) zu Versorgung der letzteren mit elektrischer Energie, über das durch Einsatz von Trägerströmen Informationen übermittelt werden, insbesondere für ein Kraftfahrzeug, wobei die Station (2) mindestens eine Last (3) und einen Modulator/Demodulator (4) aufweist, **dadurch gekennzeichnet, dass** sie einen Transformator (5) mit drei Wicklungen (6, 7, 10) aufweist, die durch einen magnetischen Kreis gekoppelt sind, von denen die beiden ersten (6, 7) der Last (3) zugeordnet sind und eine (6) davon zwischen dem Netz (1) und einem ersten Versorgungsanschluss (8) der Last angeschlossen ist und die andere (7) zwischen einem zweiten Versorgungsanschluss (9) der Last und Masse angeschlossen ist, so dass sie von in entgegengesetzter Richtung fließenden Strömen durchquert werden, und wobei die dritte (10) mit dem Modulator/Demodulator (4) verbunden ist, wobei die Vorrichtung des Weiteren einen ersten Entkopplungskondensator (8) aufweist, von dem ein erster Anschluss zwischen dem ersten Versorgungsanschluss (8) der Last und der entsprechenden Wicklung (6) des Transformators angeschlossen ist und von dem ein zweiter Anschluss an Masse angeschlossen ist.

2. Vorrichtung nach Anspruch 1, **dadurch gekennzeichnet, dass** ein zweiter Entkopplungskondensator (12) parallel zu den Anschlüssen der dritten Wicklung (10) angeschlossen ist.
